(19) Europäisches Patentamt / European Patent Office / Office européen des brevets

(11) **EP 4 417 440 A1**

(12) **EUROPEAN PATENT APPLICATION**
published in accordance with Art. 153(4) EPC

(43) Date of publication:
**21.08.2024 Bulletin 2024/34**

(21) Application number: **22880591.7**

(22) Date of filing: **27.06.2022**

(51) International Patent Classification (IPC):
**B60B 17/00** (2006.01)   **C22C 38/00** (2006.01)
**C22C 38/50** (2006.01)

(52) Cooperative Patent Classification (CPC):
**B60B 17/00; C22C 38/00; C22C 38/50**

(86) International application number:
**PCT/JP2022/025613**

(87) International publication number:
**WO 2023/062886 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.10.2021 JP 2021169148**

(71) Applicant: NIPPON STEEL CORPORATION
Chiyoda-ku
Tokyo 100-8071 (JP)

(72) Inventors:
• **MAEJIMA, Taketo**
Tokyo 100-8071 (JP)
• **OSAKA, Taro**
Tokyo 100-8071 (JP)
• **YAMAMOTO, Yuichiro**
Tokyo 100-8071 (JP)
• **MATSUI, Naoki**
Tokyo 100-8071 (JP)

(74) Representative: **Zimmermann & Partner**
**Patentanwälte mbB**
**Postfach 330 920**
**80069 München (DE)**

(54) **RAILROAD WHEEL**

(57)     A railway wheel that is excellent in toughness at a hub part is provided. A railway wheel according to the present disclosure includes a rim part, a hub part having a through hole, and a web part. A chemical composition of the railway wheel consists of, in mass%, C: more than 0.80% to 1.35%, Si: 1.00% or less, Mn: 0.10 to 1.50%, P: 0 to 0.050%, S: 0 to 0.030%, and N: 0.0200% or less, with the balance being Fe and impurities. In a cross section of the hub part obtained when the hub part is cut in a central axis direction of the through hole along a plane including the central axis, when regions of 15 mm × 15 mm defined by a plurality of axial line segments which are parallel to the central axis and which are arranged at a pitch of 15 mm in a radial direction of the railway wheel from an inner peripheral surface of the through hole, and by a plurality of radial line segments which are perpendicular to the central axis and which are arranged at a pitch of 15 mm in the central axis direction from a surface of the hub part in which an opening of the through hole is formed are defined as rectangular regions, the average C concentration in each rectangular region in the cross section of the hub part is 1.40% by mass or less.

FIG. 2

**Description**

TECHNICAL FIELD

The present disclosure relates to a railway wheel.

BACKGROUND ART

A railway vehicle travels on rails constituting a railway track. A railway vehicle includes a plurality of railway wheels. The railway wheels support the vehicle keeping in contact with the rail and moving on the rail while rotating thereon. The railway wheels wear due to the contact with the rail. Recently, for the purpose of increasing the efficiency of railway transportation, attempts have been made to increase the loading weight on railway vehicles and increase the speeds of railway vehicles. As a result, there is a demand to improve the wear resistance of railway wheels.

Technology to improve the wear resistance of a railway wheel has been proposed in Japanese Patent Application Publication No. 2004-315928 (Patent Literature 1).

The railway vehicle wheel disclosed in Patent Literature 1 is an integrated railway vehicle wheel composed of steel having a chemical composition consisting of, in mass%, C: 0.85 to 1.20%, Si: 0.10 to 2.00%, and Mn: 0.05 to 2.00%, and further, as needed, a predetermined amount of one or more elements selected from Cr, Mo, V, Nb, B, Co, Cu, Ni, Ti, Mg, Ca, Al, Zr, and N, with the balance being Fe and other unavoidable impurities, wherein at least a part of the tread and/or the flange surface of the wheel has a pearlitic structure. Patent Literature 1 states that the life of the railway vehicle wheel depends on the amount of wear of the tread and the flange surface (paragraph [0002] of Patent Literature 1), and further depends on a crack in the tread and the flange surface which is caused by an increase in calorific value when brakes are applied in a high-speed railway. It also states that when the railway vehicle wheel has the aforementioned configuration, wear and heat crack of the tread and the flange surface can be suppressed. In Patent Literature 1, the wear of the railway wheel is improved by using a hyper-eutectoid steel in which the content of C is increased.

CITATION LIST

PATENT LITERATURE

Patent Literature 1: Japanese Patent Application Publication No. 2004-315928
Patent Literature 2: International Application Publication No. WO2020/067520
Patent Literature 3: International Application Publication No. WO2020/067506

SUMMARY OF INVENTION

TECHNICAL PROBLEM

In this connection, a load corresponding to the loading weight of the railway vehicle is first applied to a railway axle. The load is then transmitted to the respective railway wheels through a hub part that is a contact portion between the railway axle and the railway wheel. A large load is applied to the hub part of the railway wheel. Consequently, the hub part of a railway wheel is required to have excellent toughness.

However, previous studies have not given consideration to the toughness of the hub part. This is because it has been recognized that, in a railway wheel, it is important to improve the wear resistance of a rim part that is a part which contacts the rail. In the aforementioned Patent Literature 1 also, toughness of the hub part is not discussed. Therefore, there is a possibility that excellent toughness in the hub part cannot be obtained even if the technology disclosed in Patent Literature 1 is used.

As described in the aforementioned Patent Literature 1, the wear resistance of a railway wheel can be improved by using a hyper-eutectoid steel in which the content of C is increased. However, there is a concern that when a hyper-eutectoid steel in which the content of C is increased is used, the toughness at the hub part will decrease. Therefore, there is a need for a railway wheel that is excellent in toughness at a hub part even when the content of C is a high content of more than 0.80%.

Technologies to increase the toughness of a railway wheel even when the content of C is a high content of 0.80% or more are proposed in International Application Publication No. WO2020/067520 (Patent Literature 2) and International Application Publication No. WO2020/067506 (Patent Literature 3). In Patent Literatures 2 and 3, the toughness of a railway wheel is increased by reducing pro-eutectoid cementite or by controlling the morphology of pro-eutectoid cementite.

The railway wheel disclosed in Patent Literature 2 includes a rim part, a hub part, and a web part which is disposed between the rim part and the hub part, and is connected to the rim part and the hub part. The chemical composition of the railway wheel of Patent Literature 2 consists of, in mass%, C: 0.80 to 1.15%, Si: 0.45% or less, Mn: 0.10 to 0.85%, P: 0.050% or less, S: 0.030% or less, Al: 0.200 to 1.500%, N: 0.0200% or less, Nb: 0.005 to 0.050%, Cr: 0 to 0.25%, and V: 0 to 0.12%, with the balance being Fe and impurities. Among the rim part, the hub part, and the web part of the railway wheel of Patent Literature 2, in the microstructure of at least the rim part and the web part, an amount of pro-eutectoid cementite defined by Formula (1) is 2.00 pieces/100 $\mu$m or less.

Amount of pro-eutectoid cementite (pieces/100 $\mu$m) = total sum of the number of pieces of pro-eutectoid cementite which intersect with two diagonal lines in a square visual field of 200 $\mu$m $\times$ 200 $\mu$m/(5.66 $\times$ 100 $\mu$m) $\times$ 100          (1)

The railway wheel disclosed in Patent Literature 3 includes a rim part, a hub part, and a web part which is disposed between the rim part and the hub part, and is connected to the rim part and the hub part. The chemical composition of the railway wheel of Patent Literature 3 consists of, in mass%, C: 0.80 to 1.60%, Si: 1.00% or less, Mn: 0.10 to 1.25%, P: 0.050% or less, S: 0.030% or less, Al: 0.010 to 0.650%, N: 0.0030 to 0.0200%, Cr: 0 to 0.60%, and V: 0 to 0.12%, with the balance being Fe and impurities. In the microstructure of the web part of the railway wheel of Patent Literature 3, the area fraction of pearlite is 85.0% or more, the area fraction of pro-eutectoid cementite is 0.90 to 15.00%, and the maximum width of pro-eutectoid cementite is 1.80 $\mu$m or less.

The toughness of a railway wheel can be increased by using the technologies disclosed in Patent Literatures 2 and 3. However, in Patent Literatures 2 and 3, attention is not given to the hub part. Therefore, it would be preferable for technology for further increasing the toughness at the hub part to be proposed in addition to the technologies disclosed in Patent Literatures 2 and 3.

An objective of the present disclosure is to provide a railway wheel which is excellent in toughness at a hub part, even when the content of C is a high content of more than 0.80%.

SOLUTION TO PROBLEM

A railway wheel according to the present disclosure includes:

a rim part,
a hub part having a through hole, and
a web part which is disposed between the rim part and the hub part, and is connected to the rim part and the hub part, wherein
a chemical composition of the railway wheel consists of, in mass%,
C: more than 0.80% to 1.35%,
Si: 1.00% or less,
Mn: 0.10 to 1.50%,
P: 0 to 0.050%,
S: 0 to 0.030%,
N: 0.0200% or less,
Al: 0 to 1.500%,
Cu: 0 to 0.50%,
Ni: 0 to 0.50%,
Cr: 0 to 0.50%,
V: 0 to 0.12%,
Ti: 0 to 0.010%,
Mo: 0 to 0.20%, and,
Nb: 0 to 0.050%,
with the balance being Fe and impurities,
and wherein
in a cross section of the hub part obtained when, in a central axis direction of the through hole, the hub part is cut along a plane that includes the central axis,
when regions of 15 mm $\times$ 15 mm defined by a plurality of axial line segments which are parallel to the central axis and which are arranged at a pitch of 15 mm in a radial direction of the railway wheel from an inner peripheral surface of the through hole, and by a plurality of radial line segments which are perpendicular to the central axis and which are arranged at a pitch of 15 mm in the central axis direction from a surface of the hub part in which an opening of the through hole is formed are defined as rectangular regions,

an average C concentration in each rectangular region in the cross section of the hub part is 1.40% by mass or less.

ADVANTAGEOUS EFFECTS OF INVENTION

The railway wheel of the present disclosure is excellent in toughness at a hub part even when the content of C is a high content of more than 0.80%.

BRIEF DESCRIPTION OF DRAWINGS

[FIG. 1] FIG. 1 is a cross-sectional view including a central axis of a railway wheel according to the present embodiment.
[FIG. 2] FIG. 2 is a schematic diagram illustrating sections of a measurement region where measurement is performed using an EPMA in a cross section of a hub part among the cross section of the railway wheel illustrated in FIG. 1.
[FIG. 3] FIG. 3 illustrates the relation between a C concentration and a Charpy impact value.
[FIG. 4] FIG. 4 is a schematic diagram illustrating a process for producing a railway wheel.
[FIG. 5] FIG. 5 is a cross-sectional view of a hub part for describing a method for arranging measurement visual fields of the EPMA.
[FIG. 6] FIG. 6 is a schematic diagram illustrating a process for producing a railway wheel in a case where a punched-portion volume ratio is appropriate.
[FIG. 7] FIG. 7 is a schematic diagram illustrating a process for producing a railway wheel in a case where the punched-portion volume ratio is too small.

DESCRIPTION OF EMBODIMENT

[Configuration of railway wheel]

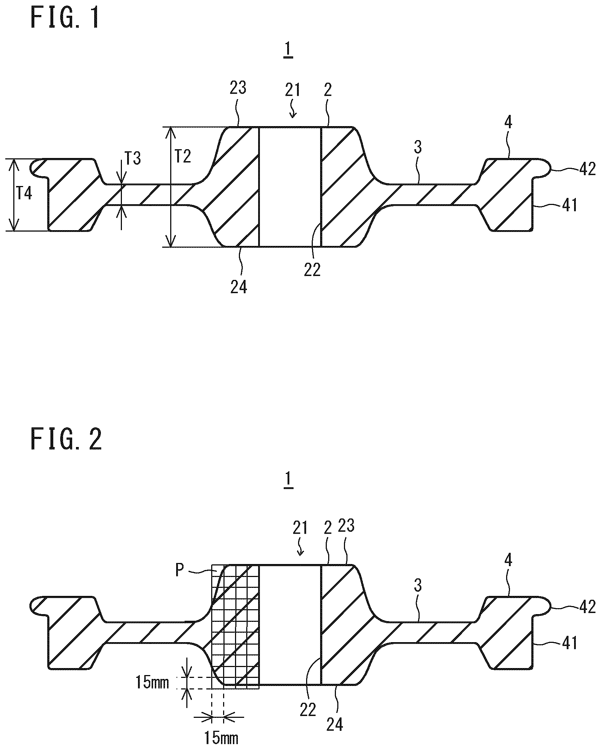

FIG. 1 is a cross-sectional view including a central axis of a railway wheel 1 according to the present embodiment. Referring to FIG. 1, the railway wheel 1 has a disc shape and includes a hub part 2, a web part 3, and a rim part 4. The hub part 2 has a cylindrical shape and is disposed at a middle part in a radial direction (direction perpendicular to the central axis) of the railway wheel 1. The hub part 2 has a through hole 21. An inner peripheral surface 22 of the hub part 2 forms the through hole 21. The central axis of the through hole 21 coincides with the central axis of the railway wheel 1. A railway axle, not shown, is inserted into the through hole 21. In the present description, the central axis direction of the through hole 21 and the railway wheel 1 is also referred to as simply a "central axis direction". A direction that is perpendicular to the central axis of the railway wheel 1 is referred to as the "radial direction of the railway wheel 1". In the present description, the radial direction of the railway wheel 1 is also referred to as simply a "radial direction".
The hub part 2 has the through hole 21. The hub part 2 also has the inner peripheral surface 22 forming the through hole 21, a flange-side surface 23, and a tread-side surface 24. The flange-side surface 23 is connected to the inner peripheral surface 22, and an opening of the through hole 21 is formed in the flange-side surface 23. The tread-side surface 24 is disposed on an opposite side to the flange-side surface 23 and is connected to the inner peripheral surface 22, and an opening of the through hole 21 is formed in the tread-side surface 24. A thickness T2 of the hub part 2 is greater than a thickness T3 of the web part 3.
The rim part 4 is formed at an edge part in the outer circumference of the railway wheel 1. The rim part 4 includes a tread 41 and a flange part 42. The tread 41 is connected to the flange part 42. During use of the railway wheel 1, the tread 41 and the flange part 42 are in contact with a rail surface. A thickness T4 of the rim part 4 is greater than the thickness T3 of the web part 3.
The web part 3 is disposed between the hub part 2 and the rim part 4, and is connected with the hub part 2 and the rim part 4. Specifically, an inner circumferential edge part of the web part 3 is connected with the hub part 2, and an outer circumferential edge part of the web part 3 is connected with the rim part 4. The thickness T3 of the web part 3 is less than the thickness T2 of the hub part 2 and the thickness T4 of the rim part 4.

[Technical idea of railway wheel of present disclosure]

The present inventors conducted studies from a chemical viewpoint in order to increase the toughness of the hub part 2. The present inventors cut the hub part 2 along a plane which included the central axis of the railway wheel 1 and which was parallel to the central axis, to thereby obtain a cross section of the hub part 2. In the observation surface, the concentrations of the principal elements were measured using an electron probe microanalyzer (EPMA). The measurement using the EPMA was performed at an arbitrary plurality of places within the cross section of the hub part 2. FIG. 2 is a schematic diagram illustrating sections of a measurement region at which measurement using the EPMA was performed in the cross section of the hub part 2 among the cross section of the railway wheel 1 illustrated in FIG. 1. Referring to FIG. 2, the cross section of the hub part 2 was divided into a plurality of rectangular regions P of 15 mm × 15 mm by a plurality of axial line segments which were parallel to the central axis of the through hole 21 and which were arranged at a pitch of 15 mm in the radial direction from the inner peripheral surface 22 of the through hole 21, and a plurality of radial line segments which were perpendicular to the central axis of the through hole 21 and which were arranged at a pitch of 15 mm in the central axis direction of the through hole 21 from the flange-side surface 23. The concentrations of principal elements in each rectangular region P were measured using the EPMA, and the average concentration in each rectangular region P was determined. As a result, it was revealed that there were variations in the C concentration in the hub part 2.

Among the plurality of rectangular regions P, in the majority of the rectangular regions P the average C concentration in the rectangular region P was 1.40% by mass or less. However, some rectangular regions P in which the C concentration was high were included among the plurality of rectangular regions P. In a case where the C concentration was high, the average C concentration within one rectangular region P was more than 1.40% by mass.

The following facts were revealed for the first time by the measurement test using the EPMA conducted by the present inventors. In the hub part 2 of the railway wheel 1, the C concentration is not necessarily constant, and in some cases the C concentration may be locally high. In addition, even in the railway wheel 1 having a chemical composition in which the content of C is 1.35% or less overall, in some cases the C concentration may become more than 1.40% by mass locally in the hub part 2.

Therefore, the present inventors investigated the manner in which the toughness changes in a case where the C concentration is more than 1.40% by mass locally. Specifically, the present inventors produced ingots by an ingot-making process using molten steel having chemical compositions shown in Table 1. Here, the C concentrations of the respective steel material numbers were varied in order to reproduce variations in the C concentrations. Note that, a blank space in a column in Table 1 means that the content of the corresponding element is 0% with respect to the number of digits specified in the embodiment. In other words, it means that, with respect to the content of the corresponding element, the value of the next digit following the digits specified in the embodiment cannot be identified, or that the content is 0% when the value of the next digit following the digits specified in the embodiment was rounded off. Note that, the term "rounded off" means rounding down if the value of the last digit (fraction) of the specified digits is less than 5, and rounding up if the value of the last digit is 5 or more.

Ingots having the chemical compositions shown in Table 1 were heated to 1250°C and thereafter subjected to hot forging to produce square-bar-shaped steel materials having a width of 45 mm, a height of 45 mm, and a length of 100 mm or more. The obtained square-bar-shaped steel materials were subjected to a heat treatment that simulated production conditions for the hub part 2 of the railway wheel 1. Specifically, four square-bar-shaped starting materials having a width of 12 mm, a height of 12 mm, and a length of 70 mm were taken from each square-bar-shaped steel material. The square-bar-shaped starting material was taken from the square-bar-shaped steel material while avoiding a range of a radius of 4 mm from the central axis thereof. The longitudinal direction of the square-bar-shaped starting material was parallel to the longitudinal direction of the square-bar-shaped steel material. The square-bar-shaped starting materials were subjected to the following heat treatment. A thermal cycle tester manufactured by Fuji Electronic Industrial Co., Ltd. was used for the heat treatment. The square-bar-shaped starting material was held at 850 to 950°C for 5 to 10 minutes. Then, to simulate the cooling process for the hub part 2, the square-bar-shaped starting material was cooled under a condition of an average cooling rate of 0.10 to 0.20°C/s or less from 750°C to 550°C.

[Table 1]

TABLE 1

| Steel Material Number | Chemical Composition (Mass%; Balance is Fe and Impurities) | | | | | | | | | | | | | |
| | C | Si | Mn | P | S | N | Al | Cu | Ni | Cr | V | Ti | Mo | Nb |
| 1 | 0.90 | 0.29 | 0.81 | 0.015 | 0.010 | 0.0041 | 0.030 | | | 0.08 | | | | |
| 2 | 1.01 | 0.30 | 0.79 | | | 0.0051 | 0.035 | | | | | | | |

(continued)

| Steel Material Number | Chemical Composition (Mass%; Balance is Fe and Impurities) | | | | | | | | | | | | | |
|---|---|---|---|---|---|---|---|---|---|---|---|---|---|---|
| | C | Si | Mn | P | S | N | Al | Cu | Ni | Cr | V | Ti | Mo | Nb |
| 3 | 1.02 | 0.29 | 0.80 | | | 0.0050 | 0.300 | | | 0.01 | | | | |
| 4 | 0.96 | 0.28 | 0.80 | 0.002 | 0.001 | 0.0044 | 0.290 | | | | | | | 0.019 |
| 5 | 1.28 | 0.40 | 1.11 | 0.015 | 0.010 | 0.0040 | 0.480 | 0.02 | 0.02 | 0.15 | | | | |
| 6 | 1.09 | 0.40 | 1.12 | 0.016 | 0.010 | 0.0040 | 0.480 | 0.02 | 0.02 | 0.15 | | 0.001 | | |
| 7 | 0.93 | 0.30 | 0.78 | 0.015 | 0.010 | 0.0038 | 0.003 | | | 0.10 | 0.07 | | 0.01 | |
| 8 | 1.24 | 0.55 | 0.78 | 0.011 | 0.001 | 0.0056 | | | | | | | | |
| 9 | 1.47 | 0.40 | 1.11 | 0.015 | 0.010 | 0.0041 | 0.480 | 0.02 | 0.02 | 0.15 | | | | |
| 10 | 1.51 | 0.41 | 1.10 | 0.015 | 0.010 | 0.0042 | 0.550 | 0.02 | 0.02 | 0.14 | | | | |

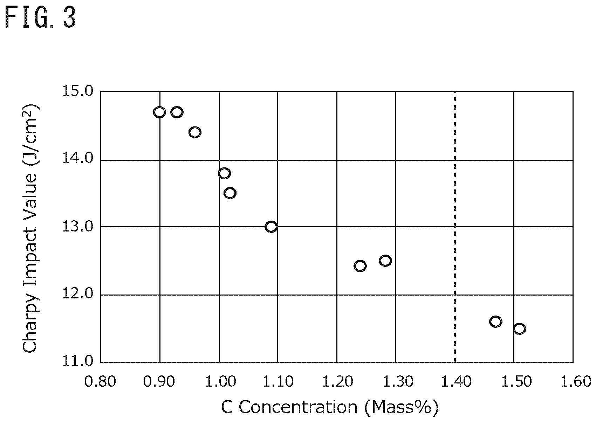

Charpy impact values were determined in order to evaluate the toughness of the steel materials of steel material numbers 1 to 10. Specifically, a U-notch test specimen in accordance with JIS Z 2242 (2005) was taken from a center position in a cross section perpendicular to a longitudinal direction of the square-bar-shaped starting material of each steel material number. A cross section perpendicular to the longitudinal direction of the U-notch test specimen was made a square of 10 mm $\times$ 10 mm, and a length in the longitudinal direction of the U-notch test specimen was made 55 mm. The longitudinal direction of the U-notch test specimen was made parallel to the longitudinal direction of the square-bar-shaped starting material. A U-notch was formed at a central position of the length of the U-notch test specimen (that is, at a central position of the length of 55 mm). A notch depth was set to 2 mm, and a notch bottom radius was set to 1 mm. A Charpy impact test was conducted in the atmosphere at room temperature in accordance with JIS Z 2242 (2005). Charpy impact values (J/cm$^2$) were determined with respect to four U-notch test specimens for each steel material number, and the average value of those four values was adopted as the Charpy impact value (J/cm$^2$) of the relevant steel material number. The results are shown in Table 2 and FIG. 3.

[Table 2]

TABLE 2

| Steel Material Number | C Concentration (Mass%) | Charpy Impact Value (J/cm$^2$) |
|---|---|---|
| 1 | 0.90 | 14.7 |
| 2 | 1.01 | 13.8 |
| 3 | 1.02 | 13.5 |
| 4 | 0.96 | 14.4 |
| 5 | 1.28 | 12.5 |
| 6 | 1.09 | 13.0 |
| 7 | 0.93 | 14.7 |
| 8 | 1.24 | 12.4 |
| 9 | 1.47 | 11.6 |
| 10 | 1.51 | 11.5 |

Referring to Table 2 and FIG. 3, it was found that the Charpy impact values (J/cm$^2$) of the steel materials in which the C concentration was more than 1.40% by mass were low compared to the Charpy impact values (J/cm$^2$) of the steel materials in which the C concentration was 1.40% by mass or less. In other words, in a case where the C concentration varied and the C concentration was more than 1.40% by mass locally, the toughness of a portion where the C concentration was more than 1.40% by mass was low compared to a portion where the C concentration was 1.40% by mass or less. On this basis it can be said that, among the plurality of rectangular regions P, in a rectangular region P in which the C concentration was high, the toughness is low compared to surrounding rectangular regions P.

Therefore, the present inventors considered that if variations in the C concentration in the hub part 2 are suppressed and the average C concentration within each rectangular region P is controlled so as to be 1.40% by mass or less, the toughness of the hub part 2 can be further increased.

The railway wheel 1 of the present embodiment that has been completed based on the above findings has the following configuration.

[1] A railway wheel, including:

a rim part,
a hub part having a through hole, and
a web part which is disposed between the rim part and the hub part, and is connected to the rim part and the hub part, wherein
a chemical composition of the railway wheel consists of, in mass%,
C: more than 0.80% to 1.35%,
Si: 1.00% or less,
Mn: 0.10 to 1.50%,
P: 0 to 0.050%,
S: 0 to 0.030%,
N: 0.0200% or less,
Al: 0 to 1.500%,
Cu: 0 to 0.50%,
Ni: 0 to 0.50%,
Cr: 0 to 0.50%,
V: 0 to 0.12%,
Ti: 0 to 0.010%,
Mo: 0 to 0.20%, and,
Nb: 0 to 0.050%,
with the balance being Fe and impurities,
and wherein
in a cross section of the hub part obtained when, in a central axis direction of the through hole, the hub part is cut along a plane that includes the central axis,
when regions of 15 mm × 15 mm defined by a plurality of axial line segments which are parallel to the central axis and which are arranged at a pitch of 15 mm in a radial direction of the railway wheel from an inner peripheral surface of the through hole, and by a plurality of radial line segments which are perpendicular to the central axis and which are arranged at a pitch of 15 mm in the central axis direction from a surface of the hub part in which an opening of the through hole is formed are defined as rectangular regions,
an average C concentration in each rectangular region in the cross section of the hub part is 1.40% by mass or less.

[2] The railway wheel according to [1], wherein the chemical composition contains one or more elements selected from the group consisting of:

P: 0.001 to 0.050%,
S: 0.001 to 0.030%,
Al: 0.001 to 1.500%,
Cu: 0.01 to 0.50%,
Ni: 0.01 to 0.50%,
Cr: 0.01 to 0.50%,
V: 0.01 to 0.12%,
Ti: 0.001 to 0.010%,
Mo: 0.01 to 0.20%, and
Nb: 0.010 to 0.050%.

Hereunder, the railway wheel 1 of the present embodiment is described in detail. In the present description, unless otherwise stated, the symbol "%" in relation to an element means mass percent.

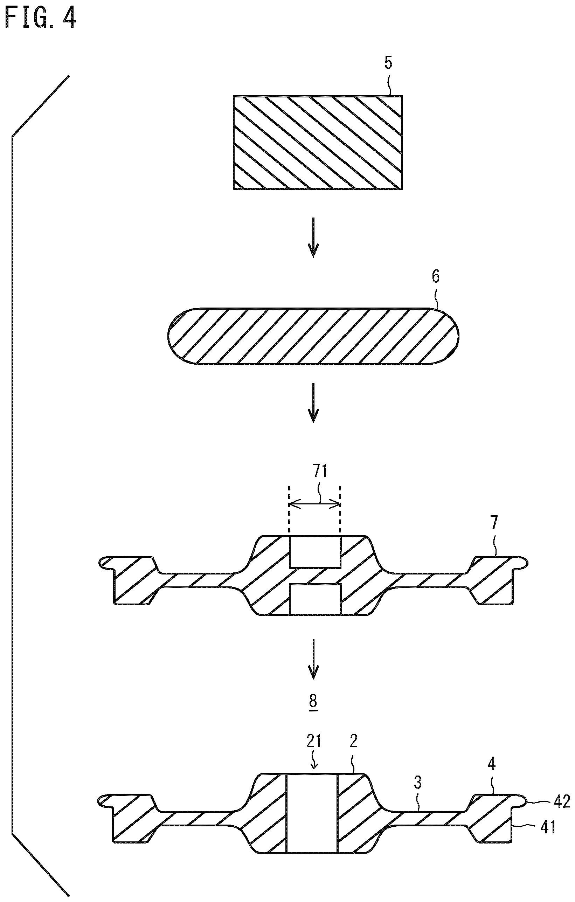

FIG. 4 is a schematic diagram illustrating a process for producing the railway wheel 1. An example of the process for producing the railway wheel 1 is as follows. A disc-shaped steel material for a railway wheel 5 is produced. The disc-shaped steel material for a railway wheel 5 is subjected to hot forging once or a plurality of times in a thickness direction to produce an intermediate product 7 having an external shape of the railway wheel 1. As necessary, hot rolling (wheel rolling) may be performed after the hot forging. A central axis portion 71 of the intermediate product 7 after forging is removed by punching so that an axle can pass therethrough. By this means, an intermediate product 8 having a shape of a railway wheel is formed. The formed intermediate product 8 is subjected to a heat treatment (tread quenching). In the tread quenching, after heating the intermediate product 8, a cooling fluid is sprayed onto the tread 41 and the flange part 42 of the rim part 4 to rapidly cool the tread 41 and the flange part 42 of the intermediate product 8. By this means, fine pearlite which has high wear resistance is formed in a matrix structure of a near-surface portion of the tread 41. However, in the near-surface portion of the tread 41 after the tread quenching, a quenched layer composed of martensite (or martensite and bainite) is formed in a layer above the fine pearlite. The quenched layer is liable to wear during use of the railway wheel 1. Therefore, after tread quenching, the quenched layer formed at an outermost layer of the tread 41 is removed by cutting. The railway wheel 1 is produced by the foregoing process.

[Chemical composition of railway wheel]

As illustrated in FIG. 1, the railway wheel 1 of the present embodiment includes the rim part 4, the hub part 2 having the through hole 21, and the web part 3 which is disposed between the rim part 4 and the hub part 2 and which is connected to the rim part 4 and the hub part 2. The chemical composition of the railway wheel 1 of the present embodiment contains the following elements.

C: more than 0.80% to 1.35%

Carbon (C) increases the hardness of the steel, and thereby increases the wear resistance of the railway wheel 1. If the content of C is 0.80% or less, this effect cannot be obtained even if the contents of other elements are within the range of the present embodiment. On the other hand, if the content of C is more than 1.35%, the toughness of the railway wheel 1 will decrease even if the contents of other elements are within the range of the present embodiment. Therefore, the content of C is to be more than 0.80% to 1.35%. A preferable lower limit of the content of C is 0.83%, more preferably is 0.85%, further preferably is 0.87%, and further preferably is 0.90%. A preferable upper limit of the content of C is 1.30%, more preferably is 1.25%, further preferably is 1.20%, further preferably is 1.10%, further preferably is 1.05%, and further preferably is 1.00%.

Si: 1.00% or less

Silicon (Si) is unavoidably contained. In other words, the content of Si is more than 0%. Si contributes to solid-solution strengthening of ferrite, and thereby increases the hardness of the steel. However, if the content of Si is more than 1.00%, the toughness of the railway wheel 1 will decrease even if the contents of other elements are within the range of the present embodiment. In addition, if the content of Si is more than 1.00%, the hardenability of the steel will be too high, and martensite is liable to be formed. In such a case, the thickness of the quenched layer formed on the tread during the tread quenching increases. As a result, the amount of cutting increases and the yield decreases. Further, if the Si content is more than 1.00%, the rim part 4 will be subjected to unexpected quenching by frictional heat generated between the railway wheel 1 and the brake during use of the railway wheel 1. In such a case, the crack resistance of the steel may decrease. Therefore, the content of Si is to be 1.00% or less. A preferable upper limit of the content of Si is 0.90%, more preferably is 0.80%, further preferably is 0.70%, further preferably is 0.60%, and further preferably is 0.50%. A lower limit of the content of Si is not particularly limited. However, excessively reducing the content of Si will increase the production cost. Therefore, the lower limit of the content of Si is preferably 0.01%, and more preferably is 0.05%. From the viewpoint of increasing the hardness of the steel, the lower limit of the content of Si is further preferably 0.10%, and further preferably is 0.15%.

Mn: 0.10 to 1.50%

Manganese (Mn) contributes to solid-solution strengthening of ferrite, and thereby increases the hardness of the steel. In addition, Mn forms MnS and thereby improves the machinability of the steel. If the content of Mn is less than 0.10%, even if the contents of other elements are within the range of the present embodiment, these effects cannot be obtained. On the other hand, if the content of Mn is more than 1.50%, even if the contents of other elements are within the range of the present embodiment, the hardenability of the steel will become too high. In such a case, the thickness of the quenched layer increases, and the yield in the production process decreases. Further, the rim part 4 will be subjected to unexpected quenching by frictional heat generated between the railway wheel 1 and the brake during use of the railway wheel 1. In such a case, the crack resistance of the steel may decrease. Therefore, the content of Mn is to be 0.10 to 1.50%. A preferable lower limit of the content of Mn is 0.50%, more preferably is 0.60%, and further preferably is 0.70%. A preferable upper limit of the content of Mn is 1.40%, more preferably is 1.30%, further preferably is 1.20%, further preferably is 1.10%, further preferably is 1.00%, further preferably is 0.95%, and further preferably is 0.90%.

P: 0 to 0.050%

Phosphorus (P) is an impurity. P segregates at grain boundaries and decreases the toughness of the steel. Therefore, the content of P is to be 0.050% or less. A preferable upper limit of the content of P is 0.030%, and more preferably is 0.020%. The content of P is preferably as low as possible. The content of P may be 0%. However, excessively reducing the content of P will increase the production cost. Therefore, when ordinary industrial productivity is taken into consideration, a preferable lower limit of the content of P is 0.001%, and more preferably is 0.002%.

S: 0 to 0.030%

Sulfur (S) is an impurity. S forms MnS and thereby enhances the machinability of the steel. On the other hand, if the content of S is too high, the toughness of the steel will decrease. Therefore, the content of S is to be 0.030% or less. A preferable upper limit of the content of S is 0.020%. The content of S is preferably as low as possible. The content of S may be 0%. However, excessively reducing the content of S will increase the production cost. Therefore, when ordinary industrial productivity is taken into consideration, a preferable lower limit of the content of S is 0.001%, more preferably is 0.002%, and further preferably is 0.005%.

N: 0.0200% or less

Nitrogen (N) is an impurity that is unavoidably contained. That is, the content of N is more than 0%. If the content of N is more than 0.0200%, even if the contents of other elements are within the range of the present embodiment, AlN will coarsen, thereby decreasing the toughness of the steel. Therefore, the content of N is to be 0.0200% or less. A preferable upper limit of the content of N is 0.0180%, more preferably is 0.0150%, further preferably is 0.0130%, further preferably is 0.0100%, and further preferably is 0.0080%. The content of N is preferably as low as possible. However, excessively reducing the content of N will raise the production cost. Therefore, when ordinary industrial productivity is taken into consideration, a preferable lower limit of the content of N is 0.0010%, more preferably is 0.0030%, and further preferably is 0.0050%.

The balance of the chemical composition of the railway wheel 1 according to the present embodiment is Fe and impurities. Here, the term "impurities" refers to elements which, when industrially producing the railway wheel 1, are mixed in from ore or scrap that is used as a raw material, or from a production environment or the like, and which are allowed within a range that does not adversely affect the railway wheel 1 of the present embodiment. An example of an impurity other than the above-described impurities is O. The content of O is, for example, 0.0070% or less.

[Regarding optional elements]

The chemical composition of the railway wheel 1 of the present embodiment may further contain one or more elements selected from the group consisting of Al, Cu, Ni, Cr, V, Ti, Mo, and Nb in lieu of a part of Fe.

Al: 0 to 1.500%

Aluminum (Al) is an optional element and need not be contained. In other words, the content of Al may be 0%. When contained, Al combines with N to form AlN, and refines the grains. The toughness of the steel is enhanced by refining the grains. However, if the content of Al is more than 1.500%, even if the contents of other elements are within the range of the present embodiment, coarse non-metallic inclusions will increase, which will reduce the toughness and fatigue strength of the steel. Therefore, the content of Al is to be 0 to 1.500%. A preferable lower limit of the content of Al is more than 0%, more preferably is 0.001%, further preferably is 0.005%, further preferably is 0.010%, further preferably is 0.020%, and further preferably is 0.030%. A preferable upper limit of the content of Al is 1.200%, more preferably is 1.000%, further preferably is 0.800%, and further preferably is 0.650%. In the present description, the term "content of Al" means the content of acid-soluble Al (sol. Al).

Cu: 0 to 0.50%

Copper (Cu) is an optional element and need not be contained. In other words, the content of Cu may be 0%. When contained, Cu increases the hardness of the steel by solid-solution strengthening. As a result, the wear resistance of the railway wheel 1 increases. However, if the content of Cu is more than 0.50%, the hot workability of the steel will decrease even if the contents of other elements are within the range of the present embodiment. Therefore, the content of Cu is to be 0 to 0.50%. A preferable lower limit of the content of Cu is more than 0%, more preferably is 0.01%, further preferably is 0.02%, further preferably is 0.05%, and further preferably is 0.10%. A preferable upper limit of the content of Cu is 0.45%, more preferably is 0.40%, further preferably is 0.35%, further preferably is 0.30%, and further preferably is 0.25%.

Ni: 0 to 0.50%

Nickel (Ni) is an optional element and need not be contained. In other words, the content of Ni may be 0%. When contained, Ni increases the toughness of the steel. However, if the content of Ni is more than 0.50%, even if the contents of other elements are within the range of the present embodiment, the hardenability will be excessively high, and the thickness of the quenched layer after the tread quenching will increase excessively. Therefore, the content of Ni is to be 0 to 0.50%. A preferable lower limit of the content of Ni is more than 0%, more preferably is 0.01%, and further preferably is 0.05%. A preferable upper limit of the content of Ni is 0.45%, more preferably is 0.40%, further preferably is 0.35%, further preferably is 0.30%, further preferably is 0.25%, and further preferably is 0.20%.

Cr: 0 to 0.50%

Chromium (Cr) is an optional element and need not be contained. In other words, the content of Cr may be 0%. When contained, Cr narrows lamellar spacing of pearlite. This significantly increases the hardness of the pearlite. However, if the content of Cr is more than 0.50%, even if the contents of other elements are within the range of the present embodiment, the hardenability will be excessively high, and the thickness of the quenched layer after the tread quenching will increase excessively. Therefore, the content of Cr is to be 0 to 0.50%. A preferable lower limit of the content of Cr is more than 0%, more preferably is 0.01%, further preferably is 0.02%, further preferably is 0.03%, and further preferably is 0.05%. A preferable upper limit of the content of Cr is 0.45%, more preferably is 0.40%, further preferably is 0.35%, further preferably is 0.30%, further preferably is 0.25%, and further preferably is 0.20%.

V: 0 to 0.12%

Vanadium (V) is an optional element and need not be contained. In other words, the content of V may be 0%. When contained, V forms any of carbides, nitrides and carbo-nitrides, and thereby contributes to precipitation strengthening of the steel (specifically, ferrite in the steel). As a result, the hardness of the railway wheel 1 increases and the wear resistance is enhanced. However, if the content of V is more than 0.12%, the hardenability will be high, and the thickness of the quenched layer after the tread quenching will increase excessively. Therefore, the content of V is to be 0 to 0.12%. A preferable lower limit of the content of V is more than 0%, more preferably is 0.01%, further preferably is 0.02%, and further preferably is 0.03%. A preferable upper limit of the content of V is 0.11%, more preferably is 0.10%, and further preferably is 0.08%.

Ti: 0 to 0.010%

Titanium (Ti) is an optional element and need not be contained. In other words, the content of Ti may be 0%. When contained, Ti forms any of carbides, nitrides and carbo-nitrides, and thereby contributes to precipitation strengthening of the steel (specifically, ferrite in the steel). As a result, the hardness of the railway wheel 1 increases and the wear resistance is enhanced. However, if the content of Ti is more than 0.010%, the hardenability will become high, and the thickness of the quenched layer after the tread quenching will increase excessively. Therefore, the content of Ti is to be 0 to 0.010%. A preferable lower limit of the content of Ti is more than 0%, more preferably is 0.001%, further preferably is 0.002%, and further preferably is 0.003%. A preferable upper limit of the content of Ti is 0.008%, more preferably is 0.007%, and further preferably is 0.005%.

Mo: 0 to 0.20%

Molybdenum (Mo) is an optional element and need not be contained. In other words, the content of Mo may be 0%. When contained, Mo increases the hardness of the steel. As a result, the wear resistance of the railway wheel 1 is enhanced. However, if the content of Mo is more than 0.20%, even if the contents of other elements are within the range of the present embodiment, the hardenability will be excessively high, and the thickness of the quenched layer after the tread quenching will increase excessively. Therefore, the content of Mo is to be 0 to 0.20%. A preferable lower limit of the content of Mo is more than 0%, more preferably is 0.01%, and further preferably is 0.05%. A preferable upper limit of the content of Mo is 0.18%, more preferably is 0.15%, further preferably is 0.12%, further preferably is 0.10%, and further preferably is 0.05%.

Nb: 0 to 0.050%

Niobium (Nb) is an optional element and need not be contained. In other words, the content of Nb may be 0%. When contained, Nb combines with C to form fine NbC during heating for the tread quenching in the process for producing the railway wheel 1. The fine NbC functions as a pinning particle to suppress coarsening of austenite during heating. For that reason, the prior-austenite grains are kept fine, and thus the hardenability of the steel is kept from becoming high. As a result, formation of the quenched layer in the process for producing the railway wheel 1 is suppressed. Nb also enhances the toughness of the steel material by suppressing the coarsening of prior-austenite grains. On the other hand, if the content of Nb is more than 0.050%, even if the contents of other elements are within the range of the present embodiment, the NbC will coarsen and the toughness of the steel material will, on the contrary, decrease. Therefore, the content of Nb is to be 0 to 0.050%. A preferable lower limit of the content of Nb is more than 0%, more preferably is 0.010%, and further preferably is 0.020%. A preferable upper limit of the content of Nb is 0.030%, and more preferably is 0.020%.

[Variations in C concentration in hub part]

Variations in the C concentration within the hub part 2 of the railway wheel 1 of the present embodiment are small. Specifically, in a cross section of the hub part 2 obtained when the hub part 2 is cut in a central axis direction of the through hole 21 along a plane that includes the central axis, when regions of 15 mm × 15 mm defined by a plurality of axial line segments which are parallel to the central axis and which are arranged at a pitch of 15 mm in the radial direction from the inner peripheral surface 22 of the through hole 21, and by a plurality of radial line segments which are perpendicular to the central axis and which are arranged at a pitch of 15 mm in the central axis direction from the surface of the hub part 2 in which an opening of the through hole 21 is formed are defined as rectangular regions P, an average C concentration in each rectangular region P in the cross section of the hub part 2 is 1.40% by mass or less. In the railway wheel 1 of the present embodiment, in the hub part 2 there are no rectangular regions of 15 mm × 15 mm in which the average C concentration is more than 1.40% by mass. Therefore, the toughness is high across the whole area in the hub part 2. As a result, the railway wheel 1 of the present embodiment is excellent in toughness in the hub part 2.

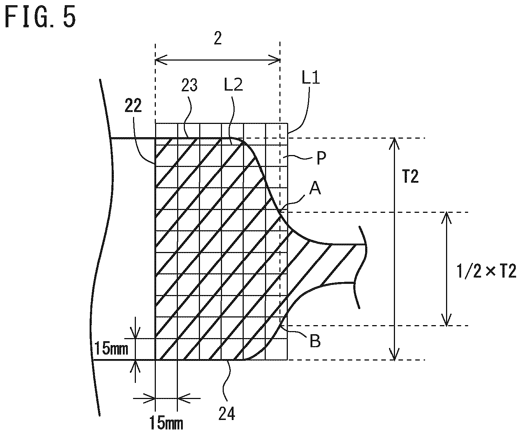

Variations in the C concentration in the hub part 2 are measured by a following method. A cross section of the hub part 2 is obtained by cutting along a plane which is parallel to the central axis of the railway wheel 1 and which includes the central axis. The cross section of the hub part 2 revealed by the cutting is polished by mechanical polishing or ion milling or the like to obtain a smooth observation surface. The C concentration in the observation surface is measured using an EPMA. The measurement visual field of the EPMA is set to a rectangle of 15 mm × 15 mm. FIG. 5 is a cross-sectional view of the hub part 2 for describing a method for arranging measurement visual fields of the EPMA. Referring to FIG. 5, in the cross section of the hub part 2, the hub part 2 is divided into sections by a plurality of axial line segments L 1 and a plurality of radial line segments L2. The axial line segments L1 are parallel to the central axis of the railway wheel 1, and are arranged at a pitch of 15 mm in the radial direction from the inner peripheral surface 22 of the through hole 21. The radial line segments L2 are perpendicular to the central axis of the railway wheel 1, and are arranged at a pitch of 15 mm in the central axis direction from a surface of the hub part 2 in which an opening of the through hole 21 is formed. In FIG. 5, the radial line segments L2 are arranged from the tread-side surface 24. However, the radial line segments L2 may be arranged from the flange-side surface 23. The regions of 15 mm × 15 mm defined by the axial line segments L1 and the radial line segments L2 are defined as the rectangular regions P. The EPMA is used to obtain the average C concentration in each rectangular region P, and to determine variations in the C concentrations. Referring to FIG. 5, in the rectangular regions P which include the outer circumference of the hub part 2, in some cases the hub part 2 is not included in the entire area of the rectangular region P. In such a case, if the area occupied by the hub part 2 in the rectangular region P is 50% or more, the relevant rectangular region P is taken as a measurement target. Note that, in the present description, the term "hub part 2" refers to, in a cross section obtained when the railway wheel 1 is cut in the central axis direction of the railway wheel 1 along a plane that includes the central axis, a region from the inner peripheral surface 22 to a position where a linear distance between two points which are on the outer circumference of the railway wheel 1 and which intersect with a straight line parallel to the central axis of the railway wheel 1 becomes half of the thickness T2 of the hub part 2. In FIG. 5, the two points which are on the outer circumference of the railway wheel 1 and which intersect with a straight line parallel to the central axis of the railway wheel 1 are shown as an intersection point A and an intersection point B, respectively. Referring to FIG. 5, the term "hub part 2" refers to a region which, in a cross section obtained when the railway wheel 1 is cut in the central axis direction of the railway wheel 1 along a plane that includes the central axis, extends from the inner peripheral surface 22 to a position where the linear distance between the intersection points A and B becomes half of the thickness T2 of the hub part 2. If the average C concentration in each rectangular region P is 1.40% by mass or less in all of the rectangular regions P that are the measurement targets, it is determined that variations in the C concentration in the hub part 2 are small.

Measurement by the EPMA was performed under the following conditions.

Accelerating voltage: 15.0 kV
Irradiation current: 0.50 μA
Time: 50 ms
Beam diameter: 20 μm
Rectangular region P: 15 mm × 15 mm
Number of measurement points in one rectangular region P: 500 × 500 points
Measurement interval: 30.0 μm in both the longitudinal direction and lateral direction
Measurement is performed at 500 × 500 points in one rectangular region P, and the arithmetic mean value of the C concentrations at all of the measurement points in the one rectangular region P is adopted as the average C concentration in the one rectangular region P.

[Microstructure of railway wheel]

In the microstructure of the rim part 4, the web part 3, and the hub part 2 of the railway wheel 1 of the present embodiment, it is desirable that the area fraction of pearlite is 75% or more, and the microstructure may be composed substantially of pearlite. Here, the phrase "composed substantially of pearlite" means that the area fraction of pearlite in the microstructure is 95% or more. However, depending on the chemical composition and the heat treatment conditions, in some cases, one or more kinds selected from the group consisting of pro-eutectoid cementite, pro-eutectoid ferrite, bainite, and martensite may be intermixed in an amount such that the total of the area fractions thereof in the microstructure is 25% or less. Therefore, the microstructure of the rim part 4, the web part 3, and the hub part 2 of the railway wheel 1 of the present embodiment may be a microstructure in which the total of the area fractions of one or more kinds selected from the group consisting of pro-eutectoid cementite, pro-eutectoid ferrite, bainite, and martensite is 0 to 25%, and the balance is pearlite.

The area fraction of pearlite is determined by a following method. Sample are taken from a central position in the thickness direction of the rim part 4, a central position in the thickness direction of the web part 3, and a central position in the thickness direction of the hub part 2, of the railway wheel 1, respectively. The observation surface of each sample is mirror-finished by mechanical polishing. Thereafter, the observation surface is etched using a nital solution (mixed solution of nitric acid and ethanol). A photographic image is generated using an optical microscope with a magnification of 500× for an arbitrary one visual field (200 μm × 200 μm) in the observation surface after etching. The contrast of pearlite is different from the contrast of the quenched layer (martensite and/or bainite), pro-eutectoid cementite, and pro-eutectoid ferrite. Therefore, the quenched layer and the pearlite in the observation surface are identified based on the contrast. The area fraction of pearlite is determined based on the total area of pearlite that is identified and the area of the observation surface.

As described above, in the railway wheel 1 of the present embodiment, the content of each element in the chemical composition is within the range of the present embodiment, and when, in a cross section of the hub part 2 obtained when the hub part 2 is cut in the central axis direction of the through hole 21 along the plane that includes the central axis, the regions of 15 mm × 15 mm which are defined by the plurality of axial line segments L1 that are parallel to the central axis and that are arranged at a pitch of 15 mm in the radial direction from the inner peripheral surface 22 of the through hole 21, and by the plurality of radial line segments L2 that are perpendicular to the central axis and are arranged at a pitch of 15 mm in the central axis direction from the surface of the hub part 2 which is the surface in which the opening of the through hole 21 is formed are defined as the rectangular regions P, the average C concentration in each rectangular region P in the cross section of the hub part 2 is 1.40% by mass or less. Therefore, the hub part 2 is excellent in toughness.

[Method for producing railway wheel]

One example of a method for producing the aforementioned railway wheel 1 will now be described. The present production method includes a starting material production process, a forming process, a heat treatment process, and a cutting process. In the starting material production process, the steel material for a railway wheel 5 is produced. In the forming process, the intermediate product 8 having a wheel shape is formed from the steel material for the railway wheel 5 by hot working. In the heat treatment process, the formed intermediate product 8 is subjected to a heat treatment (tread quenching). In the cutting process, the quenched layer is removed by cutting from a tread 41 and the like of the intermediate product 8 after the heat treatment to thereby obtain the railway wheel 1. Each process is described hereunder.

[Starting material production process]

In the starting material production process, after molten steel having the chemical composition described above is melted using an electric furnace or a converter or the like, the molten steel is cast to obtain a cast material (a cast piece or an ingot). A cast piece may be produced by continuous casting, or an ingot may be produced by casting with a mold.

The cast piece or the ingot is subjected to hot working to produce the steel material for a railway wheel 5 having a desired size. The hot working is, for example, hot forging or hot rolling. In a case of producing the steel material for a railway wheel 5 by hot rolling, for example, the steel material for a railway wheel 5 is produced by a following method. In the hot rolling, for example, a blooming mill is used. The starting material is subjected to blooming by the blooming mill to produce the steel material for a railway wheel 5. In a case where a continuous mill is installed downstream of the blooming mill, the steel material after blooming may be further subjected to hot rolling using the continuous mill to produce the steel material for a railway wheel 5 of an even smaller size. In the continuous mill, a horizontal stand having a pair of horizontal rolls, and a vertical stand having a pair of vertical rolls are alternately arranged in a row. Although not particularly limited, the heating temperature of the heating furnace in the hot rolling is, for example, 1100 to 1350°C. The steel material for a railway wheel 5 is produced by the foregoing production process.

Note that, the steel material for a railway wheel 5 may be a cast material (a cast piece or an ingot). The steel material for a railway wheel 5 may be a steel material obtained by cutting a cylindrical cast material into round slices perpendicularly to the axial direction. That is, the hot working described above may be omitted. The steel material for a railway wheel 5 which is the starting material for the railway wheel 1 is produced by the processes described above. The steel material for a railway wheel 5 is, for example, a starting material that has a cylindrical shape.

[Forming process]

In the forming process, the prepared steel material for a railway wheel 5 is used to form the intermediate product 8 having a wheel shape by hot working. Since the intermediate product 8 has a wheel shape, the intermediate product 8 includes the hub part 2, the web part 3, and the rim part 4 including the tread 41 and the flange part 42. The hot working is, for example, hot forging, hot rolling (wheel rolling), or the like. As one example, if the forming process described hereunder is performed, variations in the C concentration in the hub part 2 can be made small.

FIG. 4 is a schematic diagram illustrating a process for producing the railway wheel 1. Referring to FIG. 4, a disc-shaped intermediate product 6 is produced by subjecting the steel material for a railway wheel 5 to hot forging. By performing further hot forging on the disc-shaped intermediate product 6, an intermediate product 7 having the external shape of a wheel is produced. As necessary, hot rolling (wheel rolling) may be performed after the hot forging. Next, a central axis portion 71 of the intermediate product 7 having the external shape of a wheel is removed by punching. Thus, an intermediate product 8 having the shape of a wheel is produced.

The present inventors found that variations in the C concentration in the hub part 2 can be suppressed by adjusting the volume of the central axis portion 71 of the intermediate product 7 having the external shape of a wheel (hereunder, referred to as "the central axis portion 71") with respect to the volume of the steel material for a railway wheel 5. Although the reason for this is not clear, for example, it is conceivable that the reason is as follows.

In the present description, the volume of the central axis portion 71 with respect to the volume of the steel material for a railway wheel 5 is referred to as a "punched-portion volume ratio". The punched-portion volume ratio is defined by the following Formula (i).

$$(D71^2 \times T71)/(D5^2 \times T5) \qquad \text{(i)}$$

In Formula (i), a diameter (cm) of the central axis portion 71 is substituted for D71, a thickness (cm) of the central axis portion 71 is substituted for T71, a diameter (cm) of the steel material for a railway wheel 5 is substituted for D5, and a thickness (cm) of the steel material for a railway wheel 5 is substituted for T5.

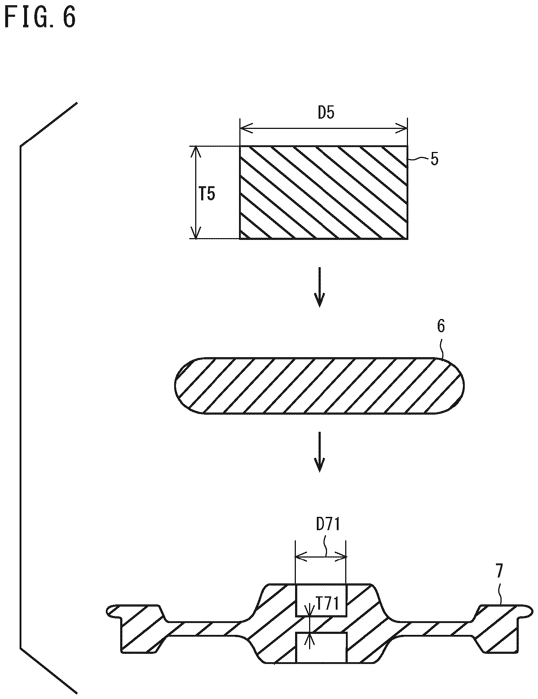

FIG. 6 is a schematic diagram illustrating the process for producing the railway wheel 1 in a case where the punched-portion volume ratio is appropriate. Referring to FIG. 6, the central axis portion of the steel material for a railway wheel 5 is crushed by hot working, and expands and spreads in the radial direction of the steel material for a railway wheel 5. When the punched-portion volume ratio is appropriate, the volume of the central axis portion 71 with respect

EP 4 417 440 A1

to the volume of the steel material for a railway wheel 5 is sufficiently large. In this case, strain in the hub part 2 that is caused by the hot working is small.

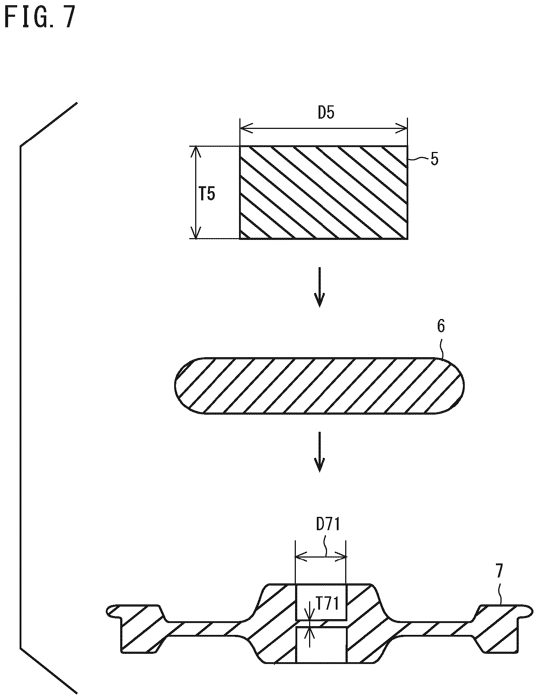

FIG. 7 is a schematic diagram illustrating the process for producing the railway wheel 1 in a case where the punched-portion volume ratio is too small. Referring to FIG. 7, in a case where the punched-portion volume ratio is too small, the volume of the central axis portion 71 with respect to the volume of the steel material for a railway wheel 5 is too small. In this case, in comparison to a case where the punched-portion volume ratio is appropriate, because the hub part 2 is subjected to a stronger rolling reduction, the strain in the hub part 2 that occurs due to the hot working is large. It is considered that in regions where strain occurred, local variations arise in the C concentration.

The present inventors conducted a study regarding the punched-portion volume ratio and variations in the C concentration in the hub part 2. Specifically, the present inventors produced railway wheels 1 in which the punched-portion volume ratios were varied, and investigated whether or not there were variations in the C concentration. As a result, as described in Examples which are described later, the present inventors found that, if the punched-portion volume ratio is 0.07% or more, variations in the C concentration in the hub part 2 can be suppressed to 1.40% by mass or less. In other words, by making the punched-portion volume ratio 0.07% or more, strain in the hub part 2 can be suppressed, and variations in the C concentration can be suppressed.

As described above, in the method for producing the railway wheel 1 of the present disclosure, the punched-portion volume ratio during hot working is adjusted to 0.07% or more. By this means, strain in the hub part 2 is suppressed, and variations in the C concentration in the hub part 2 can be suppressed. As a result, the toughness of the railway wheel 1 increases.

A preferable heating temperature of the steel material for a railway wheel 5 during hot working is 1220°C or more. A method for cooling the intermediate product after the hot working is not particularly limited. The intermediate product may be allowed to cool or may be water-cooled.

[Heat treatment process]

In the heat treatment process, the formed intermediate product 8 having a wheel shape is subjected to tread quenching. Specifically, the intermediate product 8 after the forming process (hot forging or hot rolling) is reheated to the $A_{cm}$ transformation point or higher (reheating treatment). After heating, the tread 41 and the flange part 42 of the intermediate product 8 are subjected to rapid cooling (tread quenching). For example, the tread 41 and the flange part 42 are rapidly cooled by spraying a cooling medium. The cooling medium is, for example, air, mist, or spray, and is not particularly limited as long as a cooling rate suitable for a desired structure can be obtained. Note that, at the time of the tread quenching, the web part 3 and the hub part 2 are allowed to cool without being water-cooled.

Although in the above description the intermediate product 8 is reheated, the intermediate product 8 after the hot working may be directly subjected to the tread quenching (without being reheated).

The intermediate product 8 after the tread quenching is subjected to tempering as necessary. It is sufficient if the tempering is performed at a well-known temperature for a well-known time. The tempering temperature is, for example, 400 to 600°C.

[Cutting process]

As described above, while fine pearlite is formed in an outer layer of the tread 41 of the intermediate product 8 after the heat treatment, the quenched layer is formed in the layer thereabove. Since the wear resistance of the quenched layer is low during use of the railway wheel 1, the quenched layer is removed by cutting. It is sufficient if the cutting is performed by a well-known method.

The railway wheel 1 of the present embodiment is produced by the above processes. In the railway wheel 1 of the present embodiment, the content of each element in the chemical composition is within the range of the present embodiment, and when, in a cross section of the hub part 2 obtained when the hub part 2 is cut in the central axis direction of the through hole 21 along the plane that includes the central axis, the regions of 15 mm × 15 mm which are defined by the plurality of axial line segments L1 that are parallel to the central axis and that are arranged at a pitch of 15 mm in the radial direction from the inner peripheral surface 22 of the through hole 21, and by the plurality of radial line segments L2 that are perpendicular to the central axis and that are arranged at a pitch of 15 mm in the central axis direction from the surface of the hub part 2 which is the surface in which the opening of the through hole 21 is formed are defined as the rectangular regions P, the average C concentration in each rectangular region P in the cross section of the hub part 2 is 1.40% by mass or less. Therefore, the hub part 2 is excellent in toughness.

EXAMPLES

Variations in the C concentration in the hub part with respect to the punched-portion volume ratio were investigated. Specifically, molten steel which consisted of C: 1.15%, Si: 0.30%, Mn: 0.80%, P: 0.010%, S: 0.010%, N: 0.0040%, Al: 0.500%, and Cr: 0.10%, with the balance being Fe and impurities, was produced. The aforementioned molten steel was used to produce ingots (cylindrical steel material having a diameter of 46 cm and a thickness of 50 cm) by an ingot-making process that simulated the starting material production process of the process for producing the railway wheel. Each ingot was heated to 1250°C, and thereafter subjected to hot forging one time to produce a disc-shaped intermediate product having a diameter of 87 cm and a thickness of 14 cm. Each disc-shaped intermediate product was subjected to forging one further time to produce an intermediate product having the external shape of a railway wheel with a diameter of 97 cm, in which the thickness (T4) of the rim part was 15 cm, a width of the rim part was 9 cm, the thickness (T3) of the web part was 5 cm, a width of the web part was 26 cm, the thickness (T2) of the hub part was 7 cm, and a width of the hub part was 20 cm. Intermediate products having the external shape of a railway wheel were produced in which the punched-portion volume ratio was made 0.20% or 0.05%, and whether or not there were variations in the C concentration in the hub part 2 was investigated.

The intermediate products having the external shape of a railway wheel and in which the punched-portion volume ratios had been varied were subjected to the tread quenching, after which the quenched layer was cut off to produce the railway wheels. Each of the obtained railway wheels was cut in the central axis direction of the through hole along the plane that included the central axis. The cross section of the hub part 2 was then polished by mechanical polishing to obtain a smooth observation surface. The cross section of the hub part 2 was divided into sections by the plurality of axial line segments which were parallel to the central axis of the railway wheel and which were arranged at a pitch of 15 mm in the radial direction from the inner peripheral surface of the through hole, and by the plurality of radial line segments which were perpendicular to the central axis of the railway wheel and which were arranged at a pitch of 15 mm in the central axis direction from the surface of the hub part that is the surface in which the opening of the through hole was formed. The regions of 15 mm × 15 mm thus divided were defined as the rectangular regions P. The average C concentration in each rectangular region P was measured using the EPMA. The measurement conditions for the measurement performed by the EPMA were as described in the above "Variations in C concentration in hub part". The highest C concentration among the obtained average C concentrations is shown in the column "Maximum C Concentration (mass%)" in Table 3.

[Table 3]

TABLE 3

| Test Number | Punched-portion Volume Ratio (%) | Maximum C Concentration (Mass%) |
|---|---|---|
| 1 | 0.20 | 1.28 |
| 2 | 0.05 | 1.47 |

[Charpy impact test]

A Charpy impact test was conducted to examine the relation between the C concentration and the toughness. Steel materials having the chemical compositions shown in Table 4 were prepared. The contents of C in the respective steel materials were adjusted to match the maximum C concentration in Table 3. The shape of each steel material was made a round bar with a diameter of 20 mm and a length of 125 mm.

[Table 4]

TABLE 4

| Test Number | Chemical Composition (Mass%; Balance is Fe and Impurities) | | | | | | | | | |
|---|---|---|---|---|---|---|---|---|---|---|
| | C | Si | Mn | P | S | N | Al | Cu | Ni | Cr |
| 1 | 1.28 | 0.40 | 1.11 | 0.015 | 0.010 | 0.0040 | 0.480 | 0.02 | 0.02 | 0.15 |
| 2 | 1.47 | 0.40 | 1.11 | 0.015 | 0.010 | 0.0041 | 0.480 | 0.02 | 0.02 | 0.15 |

Charpy impact values were determined in order to evaluate the toughness of the steel materials of Test Numbers 1 and 2. Specifically, a U-notch test specimen in accordance with JIS Z 2242 (2005) was taken from a center position in a cross section perpendicular to the longitudinal direction of the steel material of each steel material number. The cross section perpendicular to the longitudinal direction of the U-notch test specimen was made a square of 10 mm × 10 mm, and the length in the longitudinal direction of the U-notch test specimen was made 55 mm. The longitudinal direction of the U-notch test specimen was made parallel to the longitudinal direction of the steel material. A U-notch was formed at a central position of the length of the U-notch test specimen (that is, at a central position of the length of 55 mm). The notch depth was set to 2 mm, and the notch bottom radius was set to 1 mm. A Charpy impact test was conducted in the atmosphere at room temperature in accordance with JIS Z 2242 (2005). Charpy impact values ($J/cm^2$) were determined with respect to four U-notch test specimens for each test number, and the average value of those four values was adopted as the Charpy impact value ($J/cm^2$) of the relevant test number. The results are shown in Table 5.

[Table 5]

TABLE 5

| Test Number | Punched-portion Volume Ratio (%) | Maximum C Concentration (Mass%) | Charpy Impact Value ($J/cm^2$) |
|---|---|---|---|
| 1 | 0.20 | 1.28 | 12.5 |
| 2 | 0.05 | 1.47 | 11.6 |

[Evaluation results]

Referring to Table 5, in Test Number 1 the punched-portion volume ratio in the hot forging was 0.07% or more. Therefore, variations in the C concentration in the hub part were suppressed. Specifically, in the cross section of the hub part obtained when the hub part was cut in the central axis direction of the through hole along the plane including the central axis, when the regions of 15 mm × 15 mm defined by the plurality of axial line segments which were parallel to the central axis and which were arranged at a pitch of 15 mm in the radial direction from the inner peripheral surface of the through hole, and by the plurality of radial line segments which were perpendicular to the central axis and which were arranged at a pitch of 15 mm in the central axis direction from the surface of the hub part in which the opening of the through hole was formed were defined as the rectangular regions P, the average C concentration in each rectangular region P in the cross section of the hub part was 1.40% by mass or less. In addition, the Charpy impact value in a case where the C concentration was 1.40% by mass or less was 12.0 ($J/cm^2$) or more. That is, in the railway wheel of Test Number 1, because the average C concentration in each rectangular region P in the hub part was 1.40% by mass or less, the Charpy impact value was 12.0 ($J/cm^2$) or more across the whole area in the hub part. Therefore, the hub part of the railway wheel produced according to the conditions of Test Number 1 had excellent toughness.

On the other hand, in Test Number 2, the punched-portion volume ratio in the hot forging was less than 0.07%. Therefore, variations in the C concentration in the hub part could not be suppressed. Specifically, in the cross section of the hub part obtained when the hub part was cut in the central axis direction of the through hole along the plane including the central axis, when the regions of 15 mm × 15 mm defined by the plurality of axial line segments which were parallel to the central axis and which were arranged at a pitch of 15 mm in the radial direction from the inner peripheral surface of the through hole, and by the plurality of radial line segments which were perpendicular to the central axis and which were arranged at a pitch of 15 mm in the central axis direction from the surface of the hub part in which the opening of the through hole was formed were defined as the rectangular regions P, the rectangular regions P in the cross section of the hub part included one or more rectangular regions P where the average C concentration was more than 1.40% by mass. In addition, the Charpy impact value in a case where the C concentration was more than 1.40% by mass was less than 12.0 ($J/cm^2$). That is, in the rectangular region P where the average C concentration was more than 1.40% by mass, the Charpy impact value was less than 12.0 ($J/cm^2$). Therefore, the hub part of the railway wheel produced according to the conditions of Test Number 2 did not have excellent toughness.

An embodiment of the present disclosure has been described above. However, the foregoing embodiment is merely an example for implementing the present disclosure. Accordingly, the present disclosure is not limited to the above embodiment, and the above embodiment can be appropriately modified and implemented within a range which does not deviate from the gist of the present disclosure.

REFERENCE SIGNS LIST

1 Railway wheel
2 Hub part
3 Web part
4 Rim part
21 Through hole
22 Inner peripheral surface
23 Flange-side surface
24 Tread-side surface
41 Tread
42 Flange part
L1 Axial line segment
L2 Radial line segment

**Claims**

1. A railway wheel, comprising:

   a rim part,
   a hub part having a through hole, and
   a web part which is disposed between the rim part and the hub part, and is connected to the rim part and the hub part, wherein
   a chemical composition of the railway wheel consists of, in mass%,
   C: more than 0.80% to 1.35%,
   Si: 1.00% or less,
   Mn: 0.10 to 1.50%,
   P: 0 to 0.050%,
   S: 0 to 0.030%,
   N: 0.0200% or less,
   Al: 0 to 1.500%,
   Cu: 0 to 0.50%,
   Ni: 0 to 0.50%,
   Cr: 0 to 0.50%,
   V: 0 to 0.12%,
   Ti: 0 to 0.010%,
   Mo: 0 to 0.20%, and
   Nb: 0 to 0.050%,
   with the balance being Fe and impurities,
   and wherein
   in a cross section of the hub part obtained when, in a central axis direction of the through hole, the hub part is cut along a plane that includes the central axis,
   when regions of 15 mm × 15 mm defined by a plurality of axial line segments which are parallel to the central axis and which are arranged at a pitch of 15 mm in a radial direction of the railway wheel from an inner peripheral surface of the through hole, and by a plurality of radial line segments which are perpendicular to the central axis and which are arranged at a pitch of 15 mm in the central axis direction from a surface of the hub part in which an opening of the through hole is formed are defined as rectangular regions,
   an average C concentration in each rectangular region in the cross section of the hub part is 1.40% by mass or less.

2. The railway wheel according to claim 1, wherein the chemical composition contains one or more elements selected from the group consisting of:

   P: 0.001 to 0.050%,
   S: 0.001 to 0.030%,

Al: 0.001 to 1.500%,
Cu: 0.01 to 0.50%,
Ni: 0.01 to 0.50%,
Cr: 0.01 to 0.50%,
V: 0.01 to 0.12%,
Ti: 0.001 to 0.010%,
Mo: 0.01 to 0.20%, and
Nb: 0.010 to 0.050%.

FIG. 1

FIG. 2

FIG. 3

## FIG. 4

FIG. 5

FIG. 6

FIG. 7

## INTERNATIONAL SEARCH REPORT

International application No.

**PCT/JP2022/025613**

| A. | CLASSIFICATION OF SUBJECT MATTER |
|---|---|

***B60B 17/00***(2006.01)i; ***C22C 38/00***(2006.01)i; ***C22C 38/50***(2006.01)i
FI: C22C38/00 301Z; C22C38/50; B60B17/00 B

According to International Patent Classification (IPC) or to both national classification and IPC

| B. | FIELDS SEARCHED |
|---|---|

Minimum documentation searched (classification system followed by classification symbols)

B60B17/00; C22C38/00-38/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2018/181861 A1 (NIPPON STEEL & SUMITOMO METAL CORP.) 04 October 2018 (2018-10-04) claims, paragraphs [0014]-[0015], [0061], table 1, fig. 1 | 1-2 |
| Y | | 1-2 |
| X | WO 2018/181862 A1 (NIPPON STEEL & SUMITOMO METAL CORP.) 04 October 2018 (2018-10-04) claims, paragraphs [0014], [0040]-[0041], [0060], tables 1, 3, fig. 1 | 1-2 |
| Y | | 1-2 |
| X | WO 2020/067520 A1 (NIPPON STEEL CORP.) 02 April 2020 (2020-04-02) claims, paragraphs [0014]-[0015], [0063], table 1, fig. 1 | 1-2 |
| Y | | 1-2 |
| X | WO 2020/067506 A1 (NIPPON STEEL CORP.) 02 April 2020 (2020-04-02) claims, paragraphs [0014]-[0015], [0074], tables 1, 3, fig. 1 | 1-2 |
| Y | | 1-2 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 August 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2022/025613** |

**C.      DOCUMENTS CONSIDERED TO BE RELEVANT**

| Category* | Citation of document, with indication, where appropriate, of the relevant passages | Relevant to claim No. |
| --- | --- | --- |
| X | JP 2021-63258 A (NIPPON STEEL CORP.) 22 April 2021 (2021-04-22)<br>       claims, paragraph [0032], table 1, fig. 1 | 1-2 |
| Y | | 1-2 |
| X | WO 2021/193808 A1 (NIPPON STEEL CORP.) 30 September 2021 (2021-09-30)<br>       claims, paragraph [0039], tables 1, 2 | 1-2 |
| Y | | 1-2 |
| X | WO 2017/104719 A1 (JFE STEEL CORP.) 22 June 2017 (2017-06-22)<br>       claims, table 2, W1-3 | 1-2 |
| Y | | 1-2 |
| Y | JP 2012-107295 A (SUMITOMO METAL IND., LTD.) 07 June 2012 (2012-06-07)<br>       claims, paragraphs [0017], [0076], [0103], table 1, fig. 1 | 1-2 |

Form PCT/ISA/210 (second sheet) (January 2015)

**INTERNATIONAL SEARCH REPORT**
Information on patent family members

International application No.

**PCT/JP2022/025613**

| Patent document cited in search report | | | Publication date (day/month/year) | Patent family member(s) | | | Publication date (day/month/year) |
|---|---|---|---|---|---|---|---|
| WO | 2018/181861 | A1 | 04 October 2018 | US | 2020/0070569 | A1 | |
| | | | | claims, paragraphs [0019]-[0020], [0085]-[0086], table 1, fig. 1 | | | |
| | | | | EP | 3604599 | A1 | |
| | | | | CN | 110462090 | A | |
| WO | 2018/181862 | A1 | 04 October 2018 | US | 2020/0102623 | A1 | |
| | | | | claims, paragraphs [0019], [0056]-[0057], [0078]-[0080], tables 1, 3, fig. 1 | | | |
| | | | | EP | 3608429 | A1 | |
| | | | | CN | 110462069 | A | |
| WO | 2020/067520 | A1 | 02 April 2020 | US | 2022/0024247 | A1 | |
| | | | | claims, paragraphs [0015]-[0016], [0118]-[0119], table 1, fig. 1 | | | |
| | | | | EP | 3859028 | A1 | |
| | | | | CN | 112771191 | A | |
| WO | 2020/067506 | A1 | 02 April 2020 | US | 2022/0032681 | A1 | |
| | | | | claims, paragraphs [0018]-[0019], [0165]-[0166], tables 1, 3, fig. 1 | | | |
| | | | | EP | 3859030 | A1 | |
| | | | | CN | 112752859 | A | |
| JP | 2021-63258 | A | 22 April 2021 | (Family: none) | | | |
| WO | 2021/193808 | A1 | 30 September 2021 | JP | 7031793 | B2 | |
| | | | | claims, paragraph [0039], tables 1, 2 | | | |
| WO | 2017/104719 | A1 | 22 June 2017 | US | 2019/0249280 | A1 | |
| | | | | claims, table 2, W1-3 | | | |
| | | | | CN | 108431265 | A | |
| JP | 2012-107295 | A | 07 June 2012 | US | 2013/0243640 | A1 | |
| | | | | claims, paragraphs [0023], [0093], [0119], table 1, fig. 1 | | | |
| | | | | EP | 2641988 | A1 | |
| | | | | CN | 103221561 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004315928 A
- WO 2020067520 A
- WO 2020067506 A